# EUROPÄISCHE PATENTSCHRIFT

(11) **EP 2 583 144 B1**
(45) Veröffentlichungstag und Bekanntmachung des Hinweises auf die Patenterteilung: **28.09.2016**
(21) Anmeldenummer: 10752294.8
(22) Anmeldetag: 09.08.2010
(51) Int. Cl.: G05B 23/02, G05B 19/045

(54) **VERFAHREN ZUM ÜBERPRÜFEN EINER ANLAGE ANHAND VON ZUSTANDSÜBERGÄNGEN UND ENTSPRECHENDE ANLAGE**
METHOD FOR TESTING A SYSTEM USING STATE TRANSITIONS, AND CORRESPONDING SYSTEM
PROCÉDÉ DE VÉRIFICATION D'UNE INSTALLATION À L'AIDE DE TRANSITIONS D'ÉTAT ET INSTALLATION CORRESPONDANTE

(43) Veröffentlichungstag der Anmeldung: 24.04.2013
(73) Patentinhaber: Siemens Aktiengesellschaft, 80333 München (DE)
(72) Erfinder: DALLMANN, Michael, 90530 Wendelstein (DE); ELGER, Jürgen, 90602 Pyrbaum (DE); GAST, Christiane, 90455 Nürnberg (DE)
(86) Internationale Anmeldenummer: PCT/EP2010/004857
(87) Internationale Veröffentlichungsnummer: WO 2012/019616

(56) Entgegenhaltungen:
- EP-A1- 1 413 937
- WO-A1-2009/095084
- RAMKUMAR K B ET AL: "A fault-detection and diagnosis scheme by dynamic computation of finite-state automaton tables", INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA,IEEE, US, Bd. 2, 29. November 1999 (1999-11-29), Seiten 698-703, XP010366689, DOI: DOI:10.1109/IECON.1999.816486 ISBN: 978-0-7803-5735-8
- DRUSINSKY D ET AL: "USING STATECHARTS FOR HARDWARE DESCRIPTION AND SYNTHESIS", IEEE TRANSACTIONS ON COMPUTER AIDED DESIGN OF INTEGRATED CIRCUITS AND SYSTEMS, IEEE SERVICE CENTER, PISCATAWAY, NJ, US, Bd. 8, Nr. 7, 1. Juli 1989 (1989-07-01), Seiten 798-807, XP000136115, ISSN: 0278-0070, DOI: DOI:10.1109/43.31537

## Beschreibung

Die vorliegende Erfindung betrifft ein Verfahren zum Überprüfen einer Anlage, insbesondere des Zusammenspiels von Anlagenkomponenten, die mehrere Zustände einnehmen kann/können. Darüber hinaus betrifft die vorliegende Erfindung eine entsprechende Anlage, insbesondere die DV-technische Erfassung und Auswertung der Zustände von Komponenten der Anlage.

Ein wesentlicher Punkt bei der Inbetriebnahme von Anlagen ist der Nachweis, dass die einzelnen Systeme korrekt, d. h. gemäß Spezifikation, miteinander kommunizieren. Dies erfolgt durch einen so genannten "Black-Box-Test", d. h. es wird das Verhalten der beteiligten Systeme "von außen" (an den Schnittstellen zu den anderen Systemen) geprüft.

Kommunikation erfolgt beispielsweise durch Telegramme (Datensätze), die zwischen den Systemen ausgetauscht werden. Sie kann aber auch durch Signale erfolgen, die auf einen Bus aufgelegt werden und dort für alle (zugelassenen) Teilnehmer verfügbar sind.

Die Prüfung der beteiligten Systeme umfasst u. a. syntaktische Informationen, die sich auf eine Nachricht beziehen, wie z. B. zulässige Werte und Wertegrenzen innerhalb eines Telegramms. Die Prüfung kann sich aber auch auf semantische Informationen bezüglich einer Nachricht beziehen, wie z. B. Plausibilitätsprüfungen oder eine Prüfung von Abhängigkeiten innerhalb eines Telegramms. Weiterhin können auch semantische Informationen geprüft werden, die sich auf mehrere Nachrichten beziehen (ablaufbezogene Informationen), wie z. B. zulässige Reihenfolgen von Telegrammen oder Signalen, zulässige Statusübergänge etc.

Während der Inbetriebnahme bestehen heute folgende Probleme:
- Es ist nicht sichergestellt, dass die vorliegenden Testunterlagen tatsächlich den aktuellen Stand der Spezifikation darstellen, z. B. aufgrund nachträglicher kurzfristiger Änderungen.
- Es existieren oft mehrere Spezifikationen (für die beteiligten Systeme). Die Konsistenz und Widerspruchsfreiheit dieser Unterlagen ist nicht sichergestellt.
- Es gibt keinen automatisierten Vorgang, um die oben genannten Prüfungen durchzuführen und auszuwerten. Sie erfolgen von Hand, was einen beträchtlichen Aufwand bedeuten kann, da alle oben erwähnten Kriterien der Testergebnisse mit den jeweiligen Spezifikationen verglichen und eventuelle Abweichungen herausgefunden werden müssen.
- Durch diesen händischen Vorgang besteht auch die Gefahr, Abweichungen zu übersehen.

Die händische Auswertung und Prüfung erfolgt beispielsweise durch Protokollierung in ein Logbuch. Insbesondere erfolgt beispielsweise ein lokales Mitschreiben von Logbucheinträgen (Traces, Fehlermeldungen etc.) in den beteiligten Systemen. Dabei kann die Auswertung nur aus der Sicht des jeweiligen Systems erfolgen. Was im Gesamtzusammenhang geschehen ist, ist aus den jeweiligen Logbucheinträgen nicht ersichtlich. Vielmehr müssen die Einträge mehrerer Systeme (händisch) verglichen werden, was umständlich, zeitaufwendig und fehlerträchtig ist. Dies bedeutet, dass Semantik im Teilsystem vorhanden ist, die Gesamtsicht jedoch fehlt.

Um das Kommunikationsverhalten im Gesamtzusammenhang zu ermitteln, wird für die Analyse z. B. ein Logik-Analysator in das DV-Netz eingebracht, der alle über das Netz gesendeten Nachrichten protokolliert. Nachteilig hierbei ist, dass zwar gewisse Basisinformationen festgehalten werden können (z. B. Sender, Empfänger, Zeitstempel, Dateninhalt), dass aber der Dateninhalt nur als Byte-Strom verfügbar ist und sich die Bedeutung der Daten nicht erschließt. D. h. die Semantik ist nicht vorhanden, die Gesamtsicht ist jedoch vorhanden.

Dateninhalt nur als Byte-Strom verfügbar ist und sich die Bedeutung der Daten nicht erschließt. D. h.. die Semantik ist nicht vorhanden, die Gesamtsicht ist jedoch vorhanden.

In den beiden Fällen (Logbuch und Logik-Analysator) wird nur der jeweilige Nachrichtenaustausch festgehalten, es existiert jedoch keine Referenz zu einer Spezifikation. D. h. aus den Protokollierungen kann noch kein Rückschluss auf Konformität mit der Spezifikation gezogen werden.

Aus der EP 1 413 937 ist bereits ein Verfahren und ein System zur Überprüfung einer Anlage bekannt, wobei die Anlage als endlicher Zustandsautomat mit Zustandsübergängen definiert ist.

Die Aufgabe der vorliegenden Erfindung besteht darin, das Überprüfen einer Anlage, die mehrere Zustände einnehmen kann, zu verbessern.

Erfindungsgemäß wird diese Aufgabe gelöst durch ein Verfahren zum Überprüfen einer Anlage, die mehrere Zustände einnehmen kann, durch Ablegen je einer zustandsübergangsinformation in der Anlage für alle definierten Übergänge der Anlage von jeweils einem ersten der mehreren Zustände zu einem zweiten, Bilden einer aktuellen Zustandsubergangsinformation zu einem aktuellen Zustandsübergang der Anlage und automatisches Überprüfen der aktuellen Zustandsübergangsinformation anhand der in der Anlage abgelegten Zustandsübergangsinformationen.

Darüber hinaus wird erfindungsgemäß bereitgestellt eine Anlage, die in mehrere Zustände versetzbar ist,
umfassend eine Speichereinrichtung, in der je eine Zustandsübergangsinformation für alle definierten Zustandsübergänge der Anlage, eine Verarbeitungseinrichtung zum Bilden einer aktuellen Zustandsübergangsinformation zu einem aktuellen Zustandsübergang der Anlage und zum automatischen Überprüfen der aktuellen Zustandsübergangsinformation anhand der in der Speichereinrichtung gespeicherten Zustandsübergangsinformationen.

In vorteilhafter Weise sind also alle zulässigen Zustandsübergänge vor Ort auf der Anlage selbst gespeichert, sodass bei jedem tatsächlichen Zustandsübergang sofort überprüft werden kann, ob dieser zulässig ist oder nicht.

Speziell ist es in einer Ausführungsform möglich, das Zusammenspiel von Anlagenkomponenten der Anlage, die mehrere Zustände einnehmen können, einfach und zuverlässig überprüfen zu können. Die Zustandsübergänge betreffen dann die einzelnen Anlagenkomponenten. Als Voraussetzung dafür sind die Zustände der Komponenten zu erfassen und gegen die zugrundeliegende Spezifikation zu prüfen.

Vorzugsweise beinhaltet jede Zustandsübergangsinformation eine erste Information über den ersten Zustand und eine zweite Information über den zweiten Zustand. Damit sind nicht nur relative Zustandsübergänge in einer Zustandsübergangsinformation erfasst, sondern absolute Übergänge erfassbar.

Das Überprüfen der aktuellen Zustandsübergangsinformation kann in der Anlage selbst stattfinden. Es lässt sich damit eine unmittelbare Überprüfung vor Ort erreichen.

Alternativ kann das Überprüfen durch einen an die Anlage angeschlossenen Anlagenrekorder stattfinden, der die aktuellen Zustandsübergangsinformationen aufzeichnet. Damit kann eine Anlage auch nachträglich oder im Bedarfsfall mit einer Aufzeichnungsmöglichkeit ausgestattet werden.

In einer speziellen Ausführungsform wird in der Anlage eine Anlagendokumentation gespeichert, in der Daten bereitgestellt sind, welche einem Nutzer angezeigt werden, wenn bei dem Überprüfen festgestellt wird, dass der aktuelle Zustandsübergang nicht definiert und damit unzulässig ist. Die Anlagendokumentation und damit die Anzeige für den Benutzer kann auf diese Weise sehr spezifisch auf die Anlage ausgerichtet werden.

Die Daten aus der Anlagendokumentation können für das automatische Überprüfen genutzt werden. So können für das Überprüfen also nicht nur die Übergangsdaten selbst, sondern darüber hinaus auch weitere Daten genutzt werden.

Bei einer speziellen Ausgestaltung des Überprüfungsverfahrens bzw. der Anlage können die mehreren Zustände Typen von Telegrammen betreffen, die in der Anlage kommuniziert werden. Ein Zustandsübergang betrifft dann eben eine spezifische Abfolge von Telegrammen. Gerade die Abfolge von Telegrammen bestimmten Typs kann eine Information über den Zustand einer gesamten Anlage liefern.

In den Telegrammen können weitere Daten enthalten sein, die für das automatische Überprüfen herangezogen werden. Es lässt sich somit eine noch detailliertere Überprüfung als durch die Abfolge der Telegrammtypen alleine durchführen.

Wenn die Zustandsübergangsinformationen beispielsweise auf einem Anlagenrekorder aufgezeichnet werden, ist es günstig, wenn in jeder aktuellen Zustandsübergangsinformation eine Zeitinformation über die aktuelle Zeit enthalten ist. Dann kann nachträglich zu gewünschten Zeitpunkten eine Überprüfung der Anlage durchgeführt werden.

Die vorliegende Erfindung wird nun anhand der beigefügten Zeichnungen näher erläutert, in denen zeigen:
- FIG 1: eine Prinzipskizze zur Einbindung eines Anlagenrekorders in ein Bussystem;
- FIG 2: einen Soll-Ablauf von Telegrammen bei einem Behältertransport;
- FIG 3: einen Ist-Ablauf von Telegrammen bei dem Behältertransport;
- FIG 4: zulässige Statusübergänge in einem System;
- FIG 5: unzulässige Statusübergänge in einem System von FIG 4;
- FIG 6: erlaubte Übergänge bei den Telegrammen des Behältertransports der FIG 2 und 3; und
- FIG 7: die erlaubten Übergänge von FIG 6 in kodierter Form.

Die nachfolgend näher geschilderten Ausführungsbeispiele stellen bevorzugte Ausführungsformen der vorliegenden Erfindung dar.

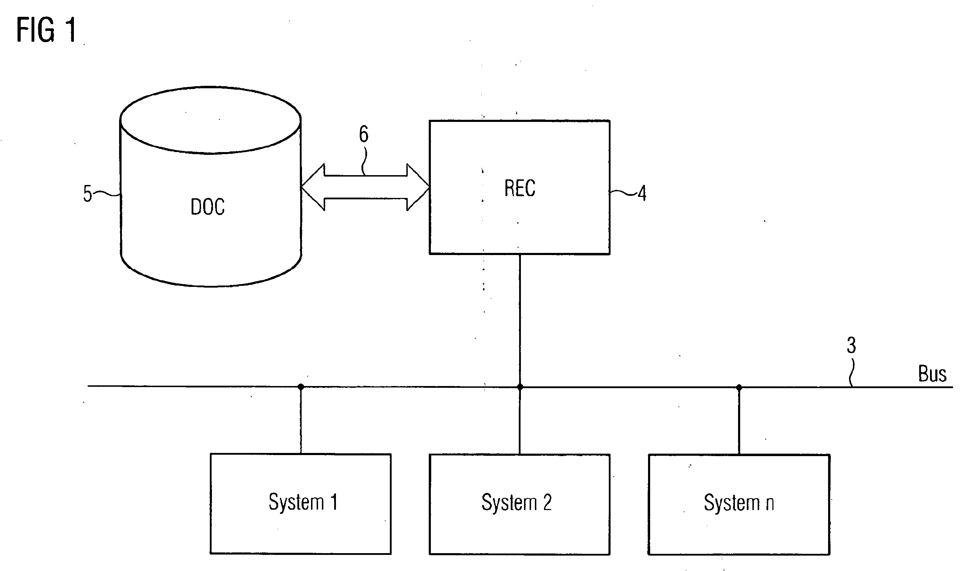

Gemäß FIG 1 besteht eine Anlage beispielsweise aus einem System 1, einem System 2,... und einem System n. Die einzelnen Systeme sind über einen Bus 3 verbunden. An den Bus 3 ist außerdem ein zentraler Anlagenrekorder 4 angeschlossen. Weiterhin verfügt die Anlage über eine Anlagendokumentation 5. Der Anlagenrekorder 4 kann mit der Anlagendokumentation 5 Topologie- und Semantikinformation über eine Datenverbindung 6 austauschen.

Der Anlagenrekorder 4 ist logisch mit den beteiligten Systemen 1 bis n verbunden (hier über den Bus 3) und er ist in der Lage, die ausgetauschten Informationen zu protokollieren und diese Daten semantisch zu interpretieren. Insbesondere ist er in der Lage, nicht korrekte Ablaufsequenzen zu erkennen.

In einer einfachen Ausführungsform verwendet der Anlagenrekorder 4 zur Interpretation der Kommunikationsdaten eigene Konfigurationsinformationen (Anlagendokumentation ist in der Anlage nicht vorhanden). Bei einer Weiterentwicklung kann der Anlagenrekorder 4 auf eine konsistente und aktuelle Anlagendokumentation 5 zurückgreifen, die u. a. spezifizierte Nachrichten, Ablaufsequenzen und Zustandsübergänge in aktueller, konsistenter Form enthält.

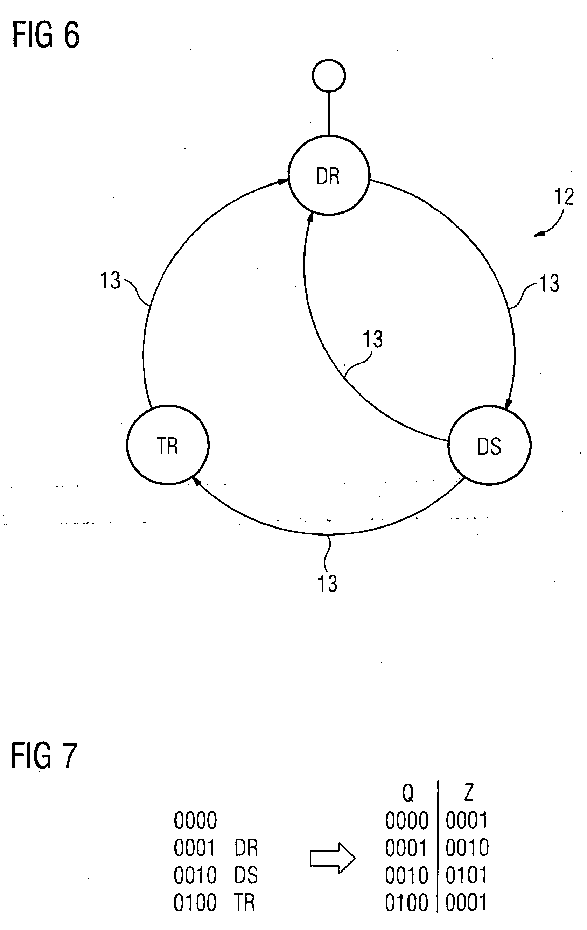

Die Spezifikationen (z. B. Zustandsdiagramm) und Modelle, die in der Anlagendokumentation 5 enthalten sind, werden verwendet, um für die Inbetriebnahmephase ein Modell (z. B. Code; vgl. FIG 7) zu erstellen, das für alle beteiligten Schnittstellenpartner gilt und zur Überprüfung der vom Anlagenrekorder 4 protokollierten Nachrichten dient. Mit dieser Information ist die Protokollierung der zeitlichen Abfolge des Informationsaustausches im Gesamtsystem möglich. Es kann eine Nachricht auf syntaktische und semantische Richtigkeit überprüft werden, und es kann überprüft werden, ob die Abfolge der Nachrichten (z. B. Telegramme) zulässig ist.

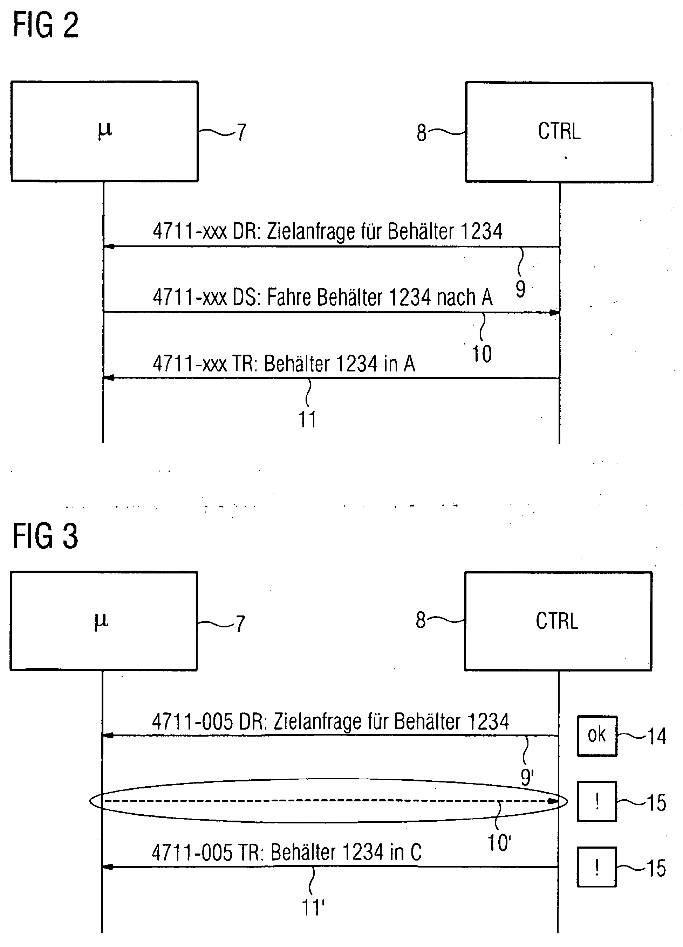

Die FIG 2 und 3 zeigen ein Beispiel aus der Intralogistik. In einem automatischen Fördersystem soll ein Behälter mit der Identifikationsnummer 1234 zum Ziel A gefahren werden (Behältertransport). Das Fördersystem besitzt einen Leitrechner 7 und eine Fördertechniksteuerung 8. Der Normalfall (Soll-Ablauf) ist in FIG 2 dargestellt. Die Fördertechnik-Steuerung 8 stellt in einem Telegramm 9 eine Zielanfrage (DR, Destination Request) an den Leitrechner 7. Dieser ermittelt das Ziel A und sendet in einem Telegramm 10 einen Transportauftrag an die Fördertechnik-Steuerung 8 (DS, Destination Set). Diese sorgt für den Transport zum gewünschten Ziel und meldet dann in einem Telegramm 11 Vollzug (TR, Transport Destination Reached).

Um ein Szenario eindeutig zu identifizieren, erhält jedes Szenario eine Szenarionummer. Das Szenario "regulärer Behältertransport" hat im Beispiel von FIG 2 die Szenarionummer 4711. Jedes Mal, wenn das Szenario verwendet wird, d. h. jedes Mal, wenn ein weiterer Behälter transportiert werden soll, wird eine an die Szenarionummer angehängte Laufnummer (xxx) um Eins erhöht. Mit dieser Kombination aus Szenarionummer und Laufnummer ist eine eindeutige Zuordnung der Behälterbewegung zum zugrunde liegenden Szenarion möglich.

In dem konkreten Beispiel von FIG 3 wird der Behälter 1234 mit dem Szenario "4711, regulärer Behältertransport" bewegt.

Die aktuelle Laufnummer ist (zufällig) 005. Würde parallel oder danach ein weiterer Behälter 5678 bewegt, würde die Szenarionummer ebenfalls 4711 sein ("regulärer Behältertransport", Laufnummer 006).

Letztlich bedeutet dies, dass pro Sequenz die Reihenfolge der spezifizierten Telegramme (9, 10, 11 für Soll-Ablauf in FIG 2 und 9', 10', 11' für Ist-Ablauf in FIG 3) sich an einem Zustandsdiagramm 12 orientiert, das auf einfache Art und Weise geprüft werden kann, wie in FIG 6 ersichtlich ist. Im Normalfall (Soll-Ablauf) folgt einem DR- ein DS-Telegramm und anschließend das Vollzugstelegramm TR zur Bestätigung, dass der Auftrag durchgeführt wurde. Aufgrund der Auslastung der Anlage kann aber nach dem Abschicken des Transportauftrags eine neue Zielanfrage kommen, bevor das Ziel erreicht ist. Dies stellt ebenfalls eine korrekte Telegrammfolge dar. Alle zulässigen Zustandsübergänge, hier Telegrammfolgen, sind in dem Diagramm 12 mit Pfeilen 13 eingezeichnet.

Setzt man nun die einzelnen Zustände gemäß FIG 7 in ein Bit-Muster um, wobei jeder Zustand einem Bit entspricht, können ausgehend von der Quelle Q alle möglichen Ziele Z als Bit-Kombination erfasst werden. Bei einem 32-Bit-Rechner können dadurch in einem Wort 32 mögliche Ziel-Zustände erfasst werden. Diese Zahl dürfte eher selten erreicht werden, da dann die Komplexität kaum überschaubar ist.

Die Prüfung, ob eine Kombination, d. h. ein Zustandsübergang bzw. eine Telegrammfolge erlaubt ist, oder nicht, kann dann durch einfache Bit-Operationen erfolgen. Sinnvollerweise sollte diese Tabelle der möglichen Kombinationen aus dem Engineering entstehen, sie kann aber auch nachträglich für den Anlagenrekorder erstellt werden.

Der Anlagenrekorder 4 schaltet sich in die Kommunikation der Partner ein. Dabei ist zu unterscheiden zwischen einem Prozessbus (wo die Daten der Partner relativ einfach von mehreren Teilnehmern gelesen werden können) und einem messageorientierten System, in dem explizit Quelle und Ziel vorgegeben ist. Auch hier existieren aber Lösungen am Markt. Beispielsweise können TCP/IP-Telegramme der Ebene 4 über das so genannte SOCKS-Protokoll verpackt und an einen anderen Empfänger gesendet werden. Der Empfänger kann dann die ursprüngliche Zieladresse auslesen und das Telegramm an das ursprüngliche Ziel weiterleiten. Das Verpacken erfolgt auf dem Quellsystem durch einen Patch der Socket-Aufrufe, durch den für bestimmte, konfigurierbare Ziele (IP-Adresse und -Port) diese Umsetzung vorgenommen wird.

Die Umleitung der Telegramme zum Anlagenrekorder 4 bewirkt zwar eine verzögerte Kommunikation, sie ist aber in der Regel in dem betrachteten Umfeld unkritisch, da derartige Telegramme überwiegend in der übergeordneten Leittechnik eingesetzt werden, wo keine Echtzeitanforderungen bestehen. Gerade in dem Umfeld, wo komplexe Produktionen oder Transporte gesteuert werden, liegt ein hohes Kommunikationsaufkommen vor, bei dem immer wieder schwer nachvollziehbare Fehler auftreten.

Der Anlagenrekorder 4 protokolliert die Telegrammdaten bzw. Telegramme 9', 10', 11', prüft sie gegen die im Modell hinterlegten Informationen (9, 10, 11) und visualisiert das Ergebnis beispielsweise gemäß FIG 3. In diesem Beispiel entspricht die beschriebene Ist-Sequenz in der Praxis dem Fall, dass für den Behälter 1234 ein Ziel angefragt wurde (Telegramm 9'), der Leitrechner 7 aber zu lange für die Zielermittlung benötigt hat und die Fördertechniksteuerung 8 deshalb den Behälter zu einem Default-Ziel C gefahren hat (vgl. Telegramm 11'). Das DR-Telegramm von der Fördertechniksteuerung 8 wurde korrekt gesendet und ein OK-Symbol 14 erscheint am Bildschirm. Das DS-Telegramm 10' vom Leitrechner 7 wurde nicht gesendet, weswegen das Fehlersymbol 15 am Bildschirm angezeigt wird. Schließlich wurde zwar das TR-Telegramm 11' von der Fördertechniksteuerung verschickt, aber das Ziel war "C", sodass ebenfalls ein Fehlersymbol 15 auf dem Bildschirm erscheint. Darüber hinaus kann auch das falsche Ziel "C" farblich markiert sein. Mit dieser Darstellung kann nun gezielt nach der konkreten Ursache für das Ausbleiben des Transportauftragstelegramms gesucht werden.

Neben dieser grafischen Visualisierung können auch Meldungen bei fehlerhaften Sequenzen an definierte Adressen abgesetzt werden.

Die Telegrammdaten können nach verschiedenen Schlüsseln sortiert werden. So können beispielsweise Inhalte der Telegramme (z. B. die Behälternummer) dazu verwendet werden. Auf diese Weise kann ermittelt werden, was mit einzelnen Objekten in der Anlage passiert. Dazu muss lediglich in der Konfiguration die Adresse des Schlüsselfelds in den Telegrammen angegeben werden. Die Stärke des Anlagenrekorders 4 ist die Auswertung von Telegrammfolgen nach verschiedenen Kriterien, um insbesondere zeitliche und logische Folgen zu verifizieren. In der Praxis sind gerade Fehler in diesem Kontext nur mit hohem Aufwand nachvollziehbar.

Liegen dem Rekorder 4 weitere semantische Informationen vor (z. B. über eine auswertbare Anlagendokumentation 5, vgl. FIG 1), kann der Rekorder 4 ausgebaut werden, um folgende, weitere Prüfungen vorzunehmen:
- Stellt das Ziel A ein gültiges Ziel in der Anlage dar (Verifikation des Anlagenlayouts der Anlagendokumentation)?
- Ist die Behälternummer 1234 formal zulässig (Verifikation anhand der Vorschrift "muss numerisch sein") in der Telegrammbeschreibung der Anlagendokumentation?
- Ist die Zielanfrage zu diesem Zeitpunkt ein zulässiges Telegramm in diesem Szenario (erstes Telegramm in der Sequenz)?

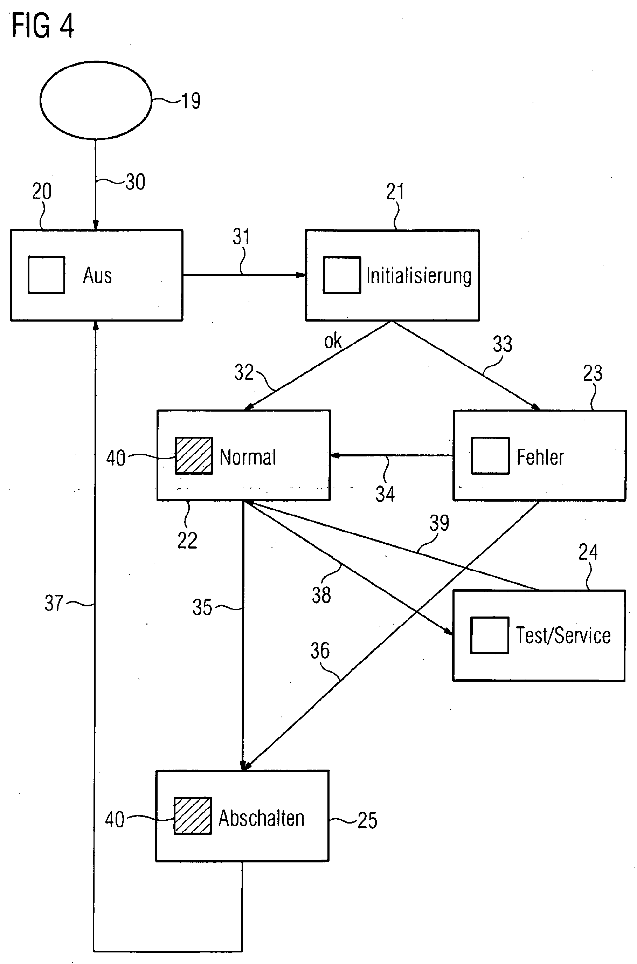

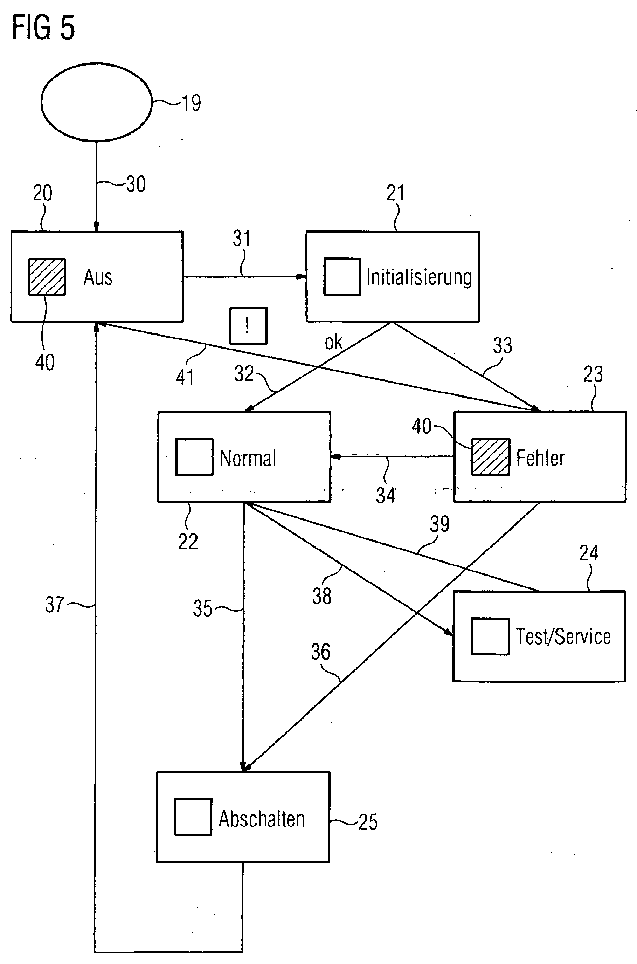

Die FIG 4 und 5 zeigen ein (ebenfalls stark vereinfachtes und unvollständiges) Beispiel aus der Verkehrstechnik. Ein Funktionsträger eines Zugs (z. B. ein Türsteuergerät) soll die dargestellten Zustände einnehmen können.

Aus einem unbestimmten Anfangszustand 19 wird bei der Inbetriebnahme definitionsgemäß zunächst der Aus-Zustand 20 durch einen Übergang 30 erreicht. Wird das Türsteuergerät gemäß Übergang 31 eingeschaltet, so kommt das Gerät in den Initialisierungszustand 21. Läuft die Initialisierung korrekt ab, so gerät das Türsteuergerät in den Normalzustand 22 gemäß Übergang 32. Bei fehlerhafter Initialisierung geht das Gerät entsprechend Übergang 33 in den Fehlerzustand 23. Bei geringfügigem Fehler kann ein Übergang 34 vom Fehlerzustand 23 zum Normalzustand 22 erfolgen. Aus dem Normalzustand 22 kann das Gerät gemäß Übergang 35 zu einem Shutdown-Zustand 25 heruntergefahren werden. Ebenso kann das Gerät aus dem Fehlerzustand 23 gemäß Übergang 36 heruntergefahren werden. Aus dem Shutdown-Zustand 25 wird das Gerät gemäß Übergang 37 in den Aus-Zustand 20 abgeschaltet. Darüber hinaus kann das Gerät von dem Normalzustand 22 in einen Test/Service-Zustand 24 durch einen Übergang 38 gebracht werden. Ein entsprechender Übergang zurück ist in FIG 4 mit 39 gekennzeichnet. Sämtliche Statusübergänge 30 bis 39 sind zulässig.

Der jeweils aktuelle Zustand des Funktionsträgers (hier Türsteuergerät) liegt als Signal auf dem verwendeten Bus des Zugs, z. B. MVB-Bus und ist für die Kommunikationspartner sichtbar. Der Anlagenrekorder 4 kennt zu einem gegebenen Funktionsträger alle zulässigen Zustände 20 bis 25 und Zustandsübergänge 30 bis 39 aus der Anlagendokumentation 5 und verfolgt und protokolliert jede Zustandsänderung, prüft sie gegen die im Modell hinterlegten Informationen und visualisiert das Ergebnis beispielsweise gemäß FIG 4, indem die stattgefundenen Übergänge der Reihe nach angezeigt werden. Bei zulässigen Übergängen wird der zuletzt stattgefundene Übergang beispielsweise durch Markierungen 40 an den betroffenen Zuständen (hier Zustände 22 und 25) grün eingefärbt.

FIG 5 zeigt ein Schaubild des Funktionsträgers bei einem unzulässigen Statusübergang 41, der beispielsweise rot eingefärbt ist. In FIG 5 sind sämtliche Zustände und Zustandsübergänge wie in FIG 4 vorhanden. Es wird daher auf die Beschreibung von FIG 4 verwiesen. Zusätzlich ist, wie erwähnt nur der unzulässige Statusübergang 41 von dem Fehlerzustand 23 zu dem Aus-Zustand 20 in der Darstellung eingezeichnet. Die entsprechenden Markierungen 40 der beiden betroffenen Zustände können rot kenntlich gemacht sein. Im Beispiel von FIG 5 hat sich der Funktionsträger nach Auftreten eines Fehlers abgeschaltet, ohne den Shutdown-Vorgang zu durchlaufen. Dieser Fehler kann nun gezielt analysiert werden.

Wie bei bekannten Protokollierungssystemen können generell verschiedene Level der Protokollierung (Granularität, Ausführlichkeit der Protokollierung) eingestellt werden. Außerdem können einzelne/ausgewählte oder alle Partner protokolliert werden. In einer weiteren Ausbaustufe ist denkbar, dass die Partner selber dem Rekorder noch zusätzliche (interne) Informationen zur Verfügung stellen, wie z. B. standardisierte Diagnose, Trace-, Zustandsdaten, die über spezielle Aufrufe abgefragt werden können.

Entsprechend der vorliegenden Erfindung kann der Nachrichtenaustausch nicht nur mitgeschrieben werden, sondern weitgehend automatisch gegen die Anlagendokumentation geprüft und das Ergebnis protokolliert sowie visualisiert werden, sodass sich Abweichungen von der Spezifikation unmittelbar darstellen lassen. Hierdurch kann eine modellbasierte Entwicklung und ein daran anschließender modellbasierter Test sowie eine Inbetriebnahme durchgeführt werden, wobei für alle Projektphasen eine gemeinsame konsistente Modellierung erfolgt (Kopplung der Entwicklungs- /Realisierungsphase mit Test-/Inbetriebnahmephase).

Der Anlagenrekorder kann nicht nur während der Inbetriebnahme auf der Baustelle eingesetzt werden, sondern bereits während der Verbundtests in der Büroumgebung. Er eignet sich auch zur Unterstützung einer virtuellen Inbetriebnahme und für Diagnosezwecke in der laufenden Anlage.

Ferner kann das Gesamtsystem automatisch protokolliert werden (ganz oder teilweise). Der Inhalt und die Bedeutung der protokollierten Daten sind ersichtlich.

Mit dem oben dargestellten System ist unter anderen Folgendes möglich:
- Automatische Protokollierung, Auswertung und Bewertung von Testsequenzen in ihrer zeitlichen Abfolge. Deutliche Reduktion des manuellen Auswertungsaufwands.
- Darstellung des Inhalts der Bedeutung von Nachrichten. Semantische Information (z. B. Signal ist Temperaturwert mit Wertebereich XY und tritt in Anlage an Stelle X auf).
- Überwachung von zulässigen Wertebereichen, Alarm bei Überschreitungen.
- Graphische Darstellung des Kommunikationsablaufs, z. B. als UML-Diagramm (Unified Modelling Language; Sequence Chart)
- Graphische Darstellung des Zustands der Partner (sofern dies als Schnittstelle zur Verfügung steht).
- "Schieberegler" für den Rekorder und Nachfahren von Ergebnissen. Analog wie bei dem Schieberegler eines PC-Videoplayers kann mit einem Schieberegler ein bestimmter Zeitpunkt in der Vergangenheit selektiert werden und von dort ab alle Kommunikationsvorgänge nochmals mit allen oben genannten Informationsmöglichkeiten dargestellt werden, was die Fehlersuche sehr erleichtert.

### Bezugszeichenliste

- 1, 2, n: Systeme
- 3: Bus
- 4: Anlagenrekorder
- 5: Anlagendokumentation
- 6: Datenverbindung
- 7: Leitrechner
- 8: Fördertechnik-Steuerung
- 9, 9', 10, 10', 11, 11': Telegramme
- 12: Zustandsdiagramm
- 13: Pfeile
- 14: OK-Symbol
- 15: Fehlersymbol
- 20: Aus-Zustand
- 21: Initialisierungszustand
- 22: Normalzustand
- 23: Fehlerzustand
- 24: Test/Service-Zustand
- 25: Shutdown-Zustand
- 30, 31, 32, 33, 34, 35, 36, 37, 38, 39: Übergänge
- 40: Markierungen
- 41: Statusübergang
- A: Ziel
- C: Default-Ziel
- Q: Quelle
- Z: Ziele

## Patentansprüche

1. Verfahren zum Überprüfen einer Anlage, die mehrere Zustände (20 bis 25) einnehmen kann, mit
- Ablegen je einer Zustandsübergangsinformation in der Anlage für alle definierten Übergänge (13, 30 bis 39) der Anlage von jeweils einem ersten der mehreren Zustände zu einem zweiten,
- Bilden einer aktuellen Zustandsübergangsinformation zu einem aktuellen Zustandsübergang der Anlage und
- automatisches Überprüfen der aktuellen Zustandsübergangsinformation anhand der in der Anlage abgelegten Zustandsübergangsinformationen
**gekennzeichnet dadurch, dass**
in der Anlage eine Anlagendokumentation (5) gespeichert wird, in der Daten bereitgestellt sind, welche einem Nutzer angezeigt werden, wenn bei dem Überprüfen festgestellt wird, dass der aktuelle Zustandsübergang (13, 30 bis 39) nicht definiert und damit unzulässig ist.

2. Verfahren nach Anspruch 1, wobei jede Zustandsübergangsinformation eine erste Information über den ersten Zustand und eine zweite Information über den zweiten Zustand beinhaltet.

3. Verfahren nach Anspruch 1 oder 2, wobei das Überprüfen durch die Anlage selbst stattfindet.

4. Verfahren nach Anspruch 1 oder 2, wobei das Überprüfen durch einen an die Anlage angeschlossene Anlagenrekorder (4) stattfindet, der die aktuellen Zustandsübergangsinformationen aufzeichnet.

5. Verfahren nach einem der vorhergehenden Ansprüche, wobei die Daten aus der Anlagendokumentation (5) für das automatische Überprüfen genutzt werden.

6. Verfahren nach einem der vorhergehenden Ansprüche, wobei die mehreren Zustände (20 bis 25) Typen von Telegrammen (9', 10'., 11') betreffen, die in der Anlage kommuniziert werden.

7. Verfahren nach Anspruch 6, wobei in den Telegrammen (9', 10', 11') weitere Daten enthalten sind, die für das automatische Überprüfen herangezogen werden.

8. Verfahren nach Anspruch 4, wobei in jeder aktuellen Zustandsübergangsinformation eine Zeitinformation über die aktuelle Zeit enthalten ist.

9. Verfahren nach einem der vorhergehenden Ansprüche, wobei eine Anlagenkomponente oder ein Zusammenspiel von mehreren Anlagenkomponenten überprüft wird.

10. Anlage,
- die in mehrere Zustände (20 bis 25) versetzbar ist, mit
- einer Speichereinrichtung, in der je eine Zustandsübergangsinformation für alle definierten Übergänge (13, 30 bis 39) der Anlage von einem ersten der mehreren Zustände zu einem zweiten gespeichert ist,
- einer Verarbeitungseinrichtung zum Bilden einer aktuellen Zustandsübergangsinformation zu einem aktuellen Zustandsübergang (13, 30 bis 39) der Anlage und
- zum automatischen Überprüfen der aktuellen Zustandsübergangsinformation anhand der in der Speichereinrichtung gespeicherten Zustandsübergangsinformationen
zur Durchführung eines Verfahrens gemäß einem der Patenansprüche 1 bis 9.

## Claims

1. Method for checking an installation which can adopt a plurality of states (20 to 25), comprising
- storing an item of state transition information in the installation for all defined transitions (13, 30 to 39) of the installation from a first of the plurality of states to a second state in each case,
- forming a current item of state transition information relating to a current state transition of the installation, and
- automatically checking the current state transition information using the state transition information stored in the installation,
**characterized in that**
the installation stores installation documentation (5) which provides data which indicate to a user when it is determined during checking that the current state transition (13, 30 to 39) is not defined and is therefore inadmissible.

2. Method according to Claim 1, each item of state transition information comprising a first item of information relating to the first state and a second item of information relating to the second state.

3. Method according to Claim 1 or 2, the checking being carried out by the installation itself.

4. Method according to Claim 1 or 2, the checking being carried out by an installation recorder (4) which is connected to the installation and records the current state transition information.

5. Method according to one of the preceding claims, the data from the installation documentation (5) being used for the automatic checking.

6. Method according to one of the preceding claims, the plurality of states (20 to 25) relating to types of messages (9', 10', 11') which are communicated in the installation.

7. Method according to Claim 6, the messages (9', 10', 11') containing further data which are used for the automatic checking.

8. Method according to Claim 4, each current item of state transition information containing an item of time information relating to the current time.

9. Method according to one of the preceding claims, an installation component or interaction of a plurality of installation components being checked.

10. Installation
- which can be changed into a plurality of states (20 to 25), having
- a storage device which stores an item of state transition information for all defined transitions (13, 30 to 39) of the installation from a first of the plurality of states to a second state,
- a processing device for forming a current item of state transition information relating to a current state transition (13, 30 to 39) of the installation and
- for automatically checking the current state transition information using the state transition information stored in the storage device,
for carrying out a method according to one of Patent Claims 1 to 9.

## Revendications

1. Procédé de vérification d'une installation, qui peut prendre plusieurs états (20 à 25), dans lequel
- on stocke chaque fois une information de transition d'état dans l'installation pour toutes les transitions définies (13, 30 à 39) de l'installation respectivement depuis un premier des multiples états jusqu'à un deuxième,
- on forme une information de transition d'état actuelle relative à une transition d'état actuelle de l'installation, et
- on vérifie automatiquement l'information de transition d'état actuelle à l'aide des informations de transition d'état stockées dans l'installation,
**caractérisé en ce que** l'on mémorise dans l'installation une documentation de l'installation (5), dans laquelle on procure des données, qui sont affichées pour un utilisateur lorsque l'on constate, lors de la vérification, que la transition d'état actuelle (13, 30 à 39) n'est pas définie et est dès lors inacceptable.

2. Procédé selon la revendication 1, dans lequel chaque information de transition d'état contient une première information sur le premier état et une deuxième information sur le deuxième état.

3. Procédé selon la revendication 1 ou 2, dans lequel la vérification est effectuée par l'installation elle-même.

4. Procédé selon la revendication 1 ou 2, dans lequel la vérification est effectuée par un enregistreur d'installation (4) relié à l'installation, qui enregistre les informations de transitions d'état actuelles.

5. Procédé selon l'une quelconque des revendications précédentes, dans lequel on utilise les données de la documentation d'installation (5) pour la vérification automatique.

6. Procédé selon l'une quelconque des revendications précédentes, dans lequel les multiples états (20 à 25) concernent des types de télégrammes (9', 10', 11'), qui sont communiqués dans l'installation.

7. Procédé selon la revendication 6, dans lequel d'autres données, qui sont utilisées pour la vérification automatique, sont contenues dans les télégrammes (9', 10', 11').

8. Procédé selon la revendication 4, dans lequel une information de temps sur le temps actuel est contenue dans chaque information de transition d'état actuelle.

9. Procédé selon l'une quelconque des revendications précédentes, dans lequel on vérifie un composant de l'installation ou un ensemble de plusieurs composants de l'installation.

10. Installation,
- qui peut être mise dans plusieurs états (20 à 25), avec
- un dispositif de mémoire, dans lequel une information de transition d'état pour toutes les transitions définies (13, 30 à 39) de l'installation depuis un premier des multiples états jusqu'à un deuxième état est mémorisée à chaque fois,
- un dispositif de traitement pour former une information de transition d'état actuelle relative à une transition d'état actuelle (13, 30 à 39) de l'installation et
- pour la vérification automatique de l'information de transition d'état actuelle à l'aide des informations de transition d'état mémorisées dans le dispositif de mémoire,
pour la mise en oeuvre d'un procédé selon l'une quelconque des revendications 1 à 9.
